# EUROPÄISCHE PATENTANMELDUNG

(11) **EP 1 514 621 A2**
(43) Veröffentlichungstag der Anmeldung: **16.03.2005**
(21) Anmeldenummer: 04021898.4
(22) Anmeldetag: 15.09.2004
(51) Int. Cl.: B22F 3/03

(54) **Drucksinterstempel für eine Drucksintervorrichtung**

(30) Priorität: 15.09.2003 DE 10344011
(71) Anmelder: Dr. Fritsch Sondermaschinen GmbH, 70736 Fellbach (DE)
(72) Erfinder: Bahr, Thomas, 71573 Allmersbach i.T. (DE); Weber, Gerhard, 71364 Winnenden (DE)
(74) Vertreter: Patentanwälte Ruff, Wilhelm, Beier, Dauster & Partner

(57) **Zusammenfassung**

Ein Drucksinterstempel für eine Drucksintervorrichtung zur Herstellung diamanthaltiger Werkzeugsegmente, mit einer Stempelfläche, die das entsprechende Werkzeugsegment druckbeaufschlagt, und die auf einen Querschnitt einer Matrizenaufnahme abgestimmt ist, sowie mit einem an die Stempelfläche anschließenden Stempelhals (10), der in einem Stempelträger der Drucksintervorrichtung montierbar ist, ist bekannt.

Erfindungsgemäß ist der Stempelhals (10) über seine in die Matrizenaufnahme eintauchende Länge gegenüber einer Grundfläche der Stempelfläche auf einen geringeren Querschnitt abgesetzt.

Ein Satz zur Herstellung diamanthaltiger Werkzeugsegmente.

## Beschreibung

Die Erfindung betrifft einen Drucksinterstempel für eine Drucksintervorrichtung zur Herstellung diamanthaltiger Werkzeugsegmente, mit einer Stempelfläche, die das entsprechende Werkzeugsegment druckbeaufschlagt, und die auf einen Querschnitt einer Matrizenaufnahme abgestimmt ist, sowie mit einem an die Stempelfläche anschließenden Stempelhals, der in einem Stempelträger der Drucksintervorrichtung montierbar ist.

Drucksintervorrichtungen zum Herstellen diamanthaltiger Werkzeugsegmente sind allgemein bekannt. Das diamanthaltige Material wird zunächst pulverförmig vorgegeben und mittels einer Kaltpressung zu einem Grünling vorgeformt. Der Grünling wird anschließend einer Matrizenaufnahme in einer Drucksintervorrichtung zugeführt. Die Matrize ist beheizt. Bei Temperaturen von ca. 900° C wird der Grünling in der Matrizenaufnahme durch zwei Drucksinterstempel, die von oben bzw. von unten her in die Matrizenaufnahme eintauchen, unter hohen Druck von bis zu 350 bar gesetzt. Die Kombination aus Druck und Hitze ergibt die Sinterung. Die Drucksinterstempel selbst weisen über ihre Länge zumindest weitgehend einen an den Querschnitt der Matrizenaufnahme angepassten Querschnitt auf, so dass der jeweilige Drucksinterstempel über seine gesamte Länge passgenau mit minimalem Spiel in die Matrizenaufnahme eintaucht. Falls die Matrize und/oder der jeweilige Drucksinterstempel bei den während des Drucksintervorganges auftretenden, hohen thermischen Belastungen an verschiedenen Stellen unterschiedliche Wärmedehnung erfährt, kann die Funktion der Drucksintervorrichtung in Mitleidenschaft gezogen werden.

Aufgabe der Erfindung ist es, einen Drucksinterstempel der eingangs genannten Art zu schaffen, der einen funktionssicheren Betrieb der Drucksintervorrichtung gewährleistet.

Diese Aufgabe wird dadurch gelöst, dass der Stempelhals über seine in die Matrizenaufnahme eintauchende Länge gegenüber einer Grundfläche der Stempelfläche auf einen geringeren Querschnitt abgesetzt ist. Dadurch ist der Stempelhals in eingetauchtem Zustand zu der Matrizenaufnahme beabstandet. Ein Verklemmen des Drucksinterstempels in der Matrizenaufnahme bei ungleichmäßiger Wärmedehnung kann hierdurch nicht erfolgen. Erfindungsgemäß ist lediglich ein kleiner, stirnseitiger Stempelabschnitt vorgesehen, an dessen Stirnende die Stempelfläche angeordnet ist, der im Querschnitt auf den Querschnitt der Matrizenaufnahme abgestimmt ist. Lediglich dieser kleine Stempelabschnitt kann über seine relativ geringe Länge - auf eine Hubrichtung des Drucksinterstempels bezogen - zu einer Verklemmung innerhalb der Matrizenaufnahme führen, falls thermische Dehnungen auftreten. Selbst im ungünstigen Fall treten daher wesentlich geringere Klemmkräfte zwischen dem Stempelabschnitt und der Matrizenaufnahme auf. Die Halteenergie für den Drucksinterstempel wird hierdurch reduziert. Auch die Aufheizenergie für die Matrizenaufnahme ist reduziert. Durch die erfindungsgemäße Lösung ist es somit auch möglich, die Matrizentemperatur selbst, die die Temperatur innerhalb der Matrizenaufnahme definiert, gegenüber bekannten Drucksintervorrichtungen geringer zu halten und dennoch gleiche Drucksinterqualität zu erlangen.

In Ausgestaltung der Erfindung ist die Stempelfläche an einem Verschleißabschnitt angeordnet, der mit dem Stempelhals verbunden ist. In weiterer Ausgestaltung der Erfindung stellt der Verschleißabschnitt einen separaten Stempelteil dar, der an dem Stempelhals durch lösbare oder unlösbare Befestigungsmittel gehalten ist. Dadurch ist es möglich, den Verschleißabschnitt aus einem anderen Material herzustellen als den Stempelhals. Insbesondere ist es möglich, für den Verschleißabschnitt ein höherwertiges Material, insbesondere eine hochverschleißfeste und temperaturbeständige Metalllegierung, vorzusehen als für den Stempelhals. Eine lösbare Anordnung des Verschleißabschnittes, d.h. des separaten Stempelteiles, ermöglicht eine Austauschbarkeit des Verschleißabschnittes. So ist es insbesondere möglich, denselben Stempelhals mit unterschiedlichen Verschleißabschnitten abhängig von unterschiedlichen Matrizengrößen der Drucksintervorrichtung zu bestücken. Zudem ist es möglich, einen verschlissenen Stempelteil in einfacher Weise auszutauschen, ohne den Stempelhals mit austauschen zu müssen.

In weiterer Ausgestaltung der Erfindung ist bei lösbarer Anordnung des separaten Stempelteiles an dem Stempelhals zwischen einander zugewandten Stirnflächen des Stempelteiles und des Stempelhalses ein Trennmittel, insbesondere eine Kupferpaste, aufgebracht. Dadurch wird verhindert, dass der Verschleißabschnitt, d.h. der separate Stempelteil, und der Stempelhals aufgrund der hohen Temperaturen und des hohen Druckes bei einem Drucksintervorgang miteinander verbacken. Der Einsatz des Trennmittels ermöglicht einen Austausch des Stempelteiles auch nach derartigen Drucksintervorgängen.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt schematisch in einer Schnittdarstellung eine Drucksintervorrichtung mit einem oberen und einem unteren Drucksinterstempel gemäß der Erfindung und
- Fig. 2: in vergrößerter, perspektivischer Darstellung einen unteren Drucksinterstempel der Drucksintervorrichtung nach Fig. 1, nicht maßstäblich dargestellt.

Eine Drucksintervorrichtung zur Herstellung diamanthaltiger Werkzeugsegmente weist eine auf einem nicht näher dargestellten Gestell angeordnete Matrize 1 auf, in der eine Matrizenaufnahme 2 vorgesehen ist. Die Matrizenaufnahme 2 stellt eine nach oben und nach unten offene Hohlkammer dar, die über ihre gesamte Höhe einen gleichbleibenden freien Querschnitt aufweist. Die Wandungen der Matrizenaufnahme 2 werden durch ein oberes Matrizenteil 3 und ein unteres Matrizenteil 4 gebildet, die in eine Trägerplatte 7 der Matrize 1 von oben her einsetzbar sind. Dem Matrizenteil 4 ist eine die Matrizenaufnahme 2 koaxial zur einer Mittellängsachse der Matrizenaufnahme 2 umgebende Heizeinrichtung 6 zugeordnet. Der Matrizenteil 4 ist zudem von einem Isolationsmantel 5 umgeben.

Koaxial zu der Mittellängsachse der Matrizenaufnahme 2 ist sowohl der oberen Stirnöffnung der Matrizenaufnahme 2 als auch der unteren Stirnöffnung der Matrizenaufnahme 2 jeweils ein Drucksinterstempel 8 zugeordnet. Jeder Drucksinterstempel 8 ist aus einem Trägerabschnitt 9, einem Stempelhals 10 und einem Verschleißabschnitt 11 als separatem Stempelteil aufgebaut. Beide Drucksinterstempel 8 sind in nicht näher dargestellter, da grundsätzlich bekannter Weise mit Hilfe entsprechender Führungs- und Antriebseinrichtungen koaxial zur Mittellängsachse der Matrizenaufnahme 2 hubbeweglich angeordnet, um von oben bzw. von unten her in die Matrizenaufnahme 2 einzutauchen und auf das zu sinternde Werkstück G, nämlich einen Grünling, den entsprechenden Pressdruck auszuüben. Für einen entsprechenden Drucksintervorgang werden beide Drucksinterstempel 8 mit Energie beaufschlagt, um von gegenüberliegenden Seiten auf das Werkstück G den notwendigen Pressdruck auszuüben.

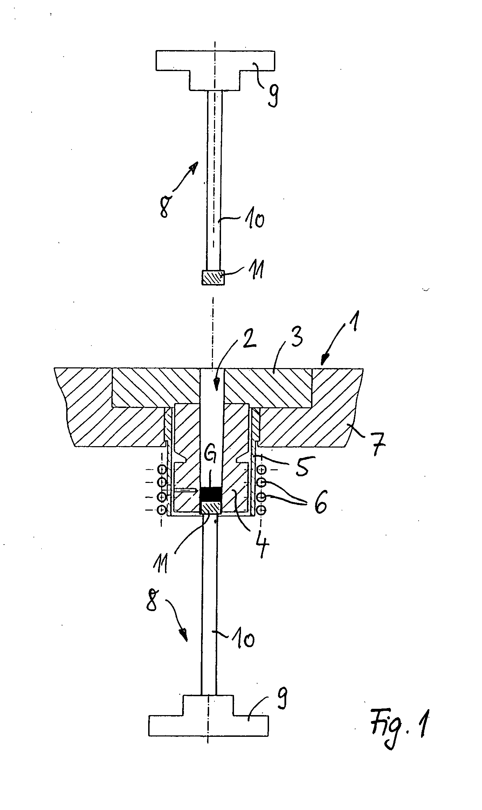

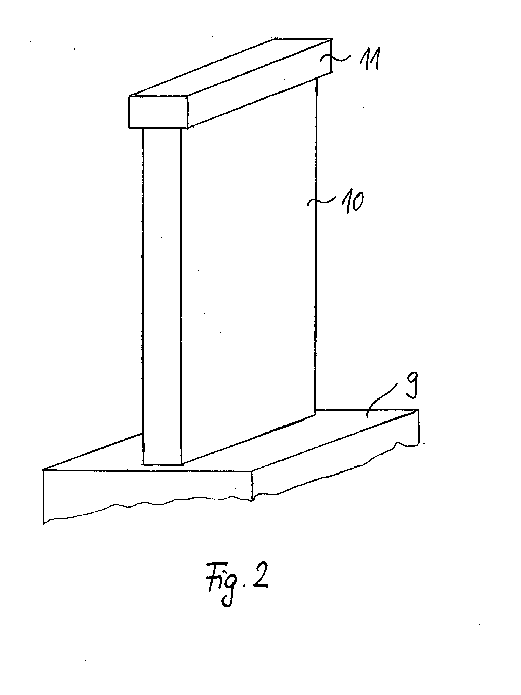

Die dargestellte Drucksintervorrichtung ist zur Herstellung von diamanthaltigen Werkzeugsegmenten in Form von Diamantperlen eines Diamantsägeseiles vorgesehen. Der grundsätzliche Aufbau, wie er anhand der Fig. 1 und 2 dargestellt ist, entspricht aber auch einem Aufbau einer Drucksintervorrichtung, die zum Drucksintern kreisbogenförmiger Werkzeugsegmente eingesetzt werden, die wiederum für Sägeblattscheiben oder ähnliches vorgesehen sind.

Der Trägerteil 9 jedes Drucksinterstempels 8 ist in nicht näher dargestellter Weise an einem entsprechenden Stempelträger der Führungsund Antriebseinrichtungen gehalten. An den Trägerteil 9 schließt einstückig oder als separates Bauteil der Stempelhals 10 an, der über seine gesamte Länge einen gleichbleibenden Querschnitt aufweist. Dieser Querschnitt ist wesentlich geringer als der freie Querschnitt der Matrizenaufnahme 2. An einem in Pressrichtung vorderen Stirnende des Stempelhalses 10 ist der Verschleißabschnitt 11 angeordnet, der beim dargestellten Ausführungsbeispiel aus einem separaten Stempelteil besteht.

Bei einem nicht dargestellten Ausführungsbeispiel der Erfindung ist der Verschleißabschnitt 11 einstückig an dem Stirnende des Stempelhalses 10 angeformt.

In beiden Fällen ist der Querschnitt des Verschleißabschnittes 11 größer als der Querschnitt des Stempelhalses 10, wobei der Querschnitt des Verschleißabschnittes 11 passgenau auf den freien Querschnitt der Matrizenaufnahme 2 abgestimmt ist. Der Verschleißabschnitt 11 ist somit stufenartig zu dem Stempelhals 10 abgesetzt, wie anhand der Fig. 1 und 2 erkennbar ist. Der Verschleißabschnitt 11 ist aus einem höherwertigen Material als der Stempelhals 10 hergestellt. Vorzugsweise ist der Verschleißabschnitt 11 aus einer hochfesten und hochtemperaturbeständigen Metalllegierung hergestellt. Der Verschleißabschnitt 11 ist durch lösbare Befestigungsmittel, vorliegend in nicht nähr dargestellter Weise durch Schraubelemente, mit dem Stempelhals 10 verbunden. Um aufgrund der hohen Druckbelastungen sowie aufgrund der hohen thermischen Belastungen bei einem Drucksintervorgang ein Verbacken zwischen der Stirnfläche des Stempelhalses 10 und der benachbarten Stirnfläche des Verschleißabschnittes 11 zu vermeiden, ist zwischen diesen einander zugewandten Stirnflächen vor der Montage des Verschleißabschnittes 11 an dem Stempelhals 10 ein Trennmittel, vorzugsweise eine Kupferpaste, eingebracht.

Um nun einen Drucksintervorgang durchführen zu können, wird zunächst ein entsprechend kaltgepresster Grünling als Werkstück G in die Matrizenaufnahme 2 eingebracht. Zuvor wurde bereits der untere Drucksinterstempel 8 mit seinem Verschleißabschnitt 11 soweit in die Matrizenaufnahme 2 von unten her eingefahren, dass für das Werkstück G, das in seinem Querschnitt auf die Matrizenaufnahme 2 abgestimmt ist, eine sichere Auflage auf Höhe der Heizeinrichtung 6 erzielt wird. Anschließend wird der Matrizenteil 4 und die Matrizenaufnahme 2 durch Energiebeaufschlagung der Heizeinrichtung 6 beheizt. Bei Erreichen der gewünschten Sintertemperatur fährt der obere Drucksinterstempel 8 in die Matrizenaufnahme 2 hinein und übt den benötigten hohen Druck auf das Werkstück G aus. Der untere Drucksinterstempel 8 dient als Gegenhalter und verbleibt in der in Fig. 1 dargestellten Position. Da der Querschnitt des Stempelhalses 10 des oberen Drucksinterstempels 8 kleiner ist als der freie Querschnitt der Matrizenaufnahme 2, liegt lediglich der - in Hubrichtung gesehen - relativ kurze Verschleißabschnitt 11 innerhalb der Matrizenaufnahme 2 an den Wandungen der Matrizenaufnahme 2 an. Falls daher der relativ kurze Verschleißabschnitt 11 aufgrund von Wärmedehnungen des Matrizenteiles 4 oder des Verschleißabschnittes 11 sich während des Drucksintervorganges in der Matrizenaufnahme 2 verklemmen sollte, so ist die Fläche, über die sich der Verschleißabschnitt 11 verklemmen kann, relativ klein. Die zur Verfügung stehende Energie zum Herausziehen des Drucksinterstempels 8 genügt daher, um die entsprechende Klemmung zu lösen.

Falls der Verschleißabschnitt 11 verschlissen ist, oder falls für eine neue Matrizenaufnahme mit gegenüber der Matrizenaufnahme 2 verändertem freiem Querschnitt die Matrizenteile 3 und 4 ausgetauscht werden müssen, ist es ohne weiteres möglich, die Verschleißabschnitte 11 durch Entfernen der Schraubelemente von dem jeweiligen Stempelhals 10 zu lösen und gegen einen entsprechend angepassten Verschleißabschnitt auszuwechseln.

## Patentansprüche

1. Drucksinterstempel für eine Drucksintervorrichtung zur Herstellung diamanthaltiger Werkzeugsegmente, mit einer Stempelfläche, die das entsprechende Werkzeugsegment druckbeaufschlagt, und die auf einen Querschnitt einer Matrizenaufnahme abgestimmt ist, sowie mit einem an die Stempelfläche anschließenden Stempelhals, der in einem Stempelträger der Drucksintervorrichtung montierbar ist,
**dadurch gekennzeichnet, dass**
der Stempelhals (10) über seine in die Matrizenaufnahme (2) eintauchende Länge gegenüber einer Grundfläche der Stempelfläche (11) auf einen geringeren Querschnitt abgesetzt ist.

2. Drucksinterstempel nach Anspruch 1, **dadurch gekennzeichnet, dass** die Stempelfläche an einem Verschleißabschnitt (11) angeordnet ist, der mit dem Stempelhals (10) verbunden ist.

3. Drucksinterstempel nach Anspruch 1, **dadurch gekennzeichnet, dass** der Verschleißabschnitt (11) einen separaten Stempelteil darstellt, der an dem Stempelhals (10) durch lösbare oder unlösbare Befestigungsmittel gehalten ist.

4. Drucksinterstempel nach Anspruch 3, **dadurch gekennzeichnet, dass** der separate Stempelteil (11) aus einem anderen Material hergestellt ist als der Stempelhals (10), insbesondere aus einer hochverschleißfesten und temperaturbeständigen Metallegierung.

5. Drucksinterstempel nach Anspruch 3, **dadurch gekennzeichnet, dass** bei lösbarer Anordnung des separaten Stempelteiles (11) an dem Stempelhals (10) zwischen einander zugewandten Stirnflächen des Stempelteiles (11) und des Stempelhalses (10) ein Trennmittel, insbesondere eine Kupferpaste, aufgebracht ist.
